# EUROPEAN PATENT APPLICATION

(11) **EP 3 546 138 A1**
(43) Date of publication of application: **02.10.2019**
(21) Application number: 19165017.5
(22) Date of filing: 25.03.2019
(51) Int. Cl.: B25J 9/16

(54) **METHOD AND SYSTEM TO DETERMINE ROBOT MOVEMENT INSTRUCTIONS.**

(30) Priority: 29.03.2018 US 201815939623
(71) Applicant: Siemens Industry Software Ltd., 7019900 Tel Aviv (IL)
(72) Inventor: HAZAN, Moshe, 4083918 Elad (IL)
(74) Representative: Maier, Daniel Oliver

(57) **Abstract**

Systems and a process for determining a set of tuned robotic motion instructions of a robot for performing robotic tasks, wherein a sudden stop of the robot implies a trajectory deviation. Inputs are received including virtual representation of the robot, information on a sequence of robotic motion instructions, information on a set of forbidden volumes. A set of segments of robotic motion instructions is defined. For each segment, a corresponding stop envelope is generated by taking into account a set of sudden stops of the robot. A subset of critical segments for which there is a certain overlapping zone between the corresponding stop envelope and the set of forbidden volumes is determined. For each critical segment, the corresponding robotic motion instructions are iteratively tuned until the newly generated stop envelope for the segment has a minimal overlapping zone with the set of forbidden volumes.

## Description

### TECHNICAL FIELD

The present disclosure is directed, in general, to computer-aided design, visualization, and manufacturing ("CAD") systems, product lifecycle management ("PLM") systems, product data management ("PDM") systems, and similar systems, that manage data for products and other items (collectively, "Product Data Management" systems or PDM systems). More specifically, the disclosure is directed to production environment simulation

### BACKGROUND OF THE DISCLOSURE

In industrial manufacturing, there are factories which are very "populated" for example by several sophisticated robots, by other pieces of equipment, by objects and/or by personnel. From time to time, e.g. due to a variety of reasons, including emergency reasons, robots stop in a sudden manner.

Unlike the scenario of the normal stopping of robot, where robots slow down along their planned trajectory, in a rapid stop scenario, the robots stop in a sudden manner and therefore may deviate from their planned trajectories. In another example, if the robot's electric power is suddenly cut, the robot may continue to move due to inertia until it actually stops.

Unfortunately, in such cases of rapid stops, robots can create serious damages. For example, robots may hurt a human being, damage themselves, damage other robots, damage other surrounding objects such as e.g. safety guards, guns, tools, products and others objects.

Moreover, due to such damages, the factory production might be blocked until the damaged equipment is replaced, e.g. this might imply time wastes due to order waiting, delivery and installation for the new equipment.

Thus, there are unforeseen high costs due to waste of resources from poor planning of sudden robot stops.

State of art techniques for avoiding damages from rapid stops of robots are often inefficient by implying too strict limitations on the allowed robot movements, otherwise they risk to be unsafe.

Therefore, improved techniques are desirable.

### SUMMARY OF THE DISCLOSURE

Various disclosed embodiments include methods and corresponding systems and computer readable mediums for determining a set of tuned robotic motion instructions of a robot for performing robotic tasks, wherein a sudden stop of the robot implies a trajectory deviation. A method includes receiving inputs including virtual representation of the robot, information on a sequence of robotic motion instructions, information on a set of forbidden volumes. The method includes defining a set of segments of robotic motion instructions. The method includes generating, for each segment, a corresponding stop envelope by taking into account a set of sudden stops of the robot. The method includes determining a subset of critical segments for which there is a certain overlapping zone between the corresponding stop envelope and the set of forbidden volumes. The method includes, for each critical segments, iteratively tuning the corresponding robotic motion instructions until the newly generated stop envelope for the segment has a minimal overlapping zone with the set of forbidden volumes.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented.
Figure 2 schematically illustrates a drawing of an exemplary case scenario of a robot where a rapid stop causes a collision with an object.
Figure 3 schematically illustrates a drawing where with tuned robotic motion instructions in accordance with disclosed embodiments a rapid stop collision between the robot and the object is avoided.
Figure 4a and Figure 4b schematically illustrates drawings of robot's stop envelopes where with tuned robotic motion instructions in accordance with disclosed embodiments a safety volume is advantageously reduced in size.
Figure 5 illustrates a flowchart of a process for determining for determining tuned robotic motion instructions for robot's rapid stops in accordance with disclosed embodiments.

### DETAILED DESCRIPTION

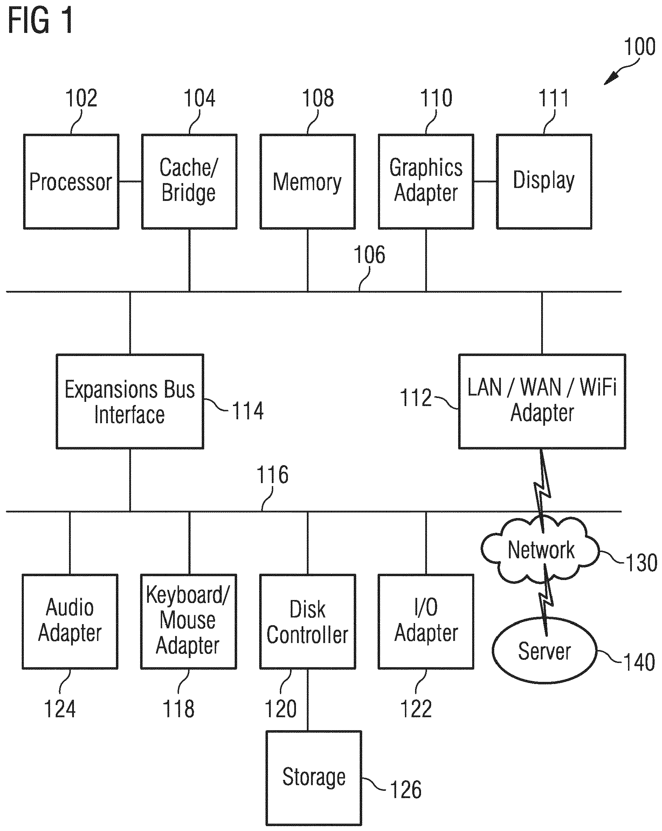

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Previous techniques are not satisfactory.

Previous techniques for determining tuned robotic motion instructions for rapid stops of robots based on a manual "trial-and-error" approach are cumbersome, tedious, error-prone, and otherwise ill-suited for the task.

Previous techniques for determining tuned robotic motion instructions for rapid stops of robots require too much time and effort.

Embodiments predict the robot behavior and movements during rapid stops calls in a reliable manner.

Embodiments enable to refine the robotic program so as to minimize the damages from a robot rapid stop within the allowed cycle time frame.

Embodiments provide reliable results by simulating the realistic behavior of the physical robot with realistic robot simulation ("RRS") or Virtual Robot Controller (VRC) or any other software module that emulates the real robotic motion planning.

Embodiments enable to make offline simulations and automatic tunings in a virtual manufacturing environment.

Embodiments provide a solution in a three-dimensional virtual environment without employing real physical robots causing production delays.

Embodiments enable high quality results by finding the tuned robotic motion instructions for a robotic program having the desired level of cycle time and/or level of risk. Therefore, in embodiments, the damages to surrounding human operators and equipment are reduced by setting the desired risk level of collision in a robotic path.

Embodiments provide the users with tools to predict and manipulate robotic behavior in case of rapid stops.

Figure 1 illustrates a block diagram of a data processing system 100 in which an embodiment can be implemented, for example as a PDM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows™, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

One or more of the processor 102, the memory 108, and the program running on the processor 102 receive the inputs via one or more of the local system bus 106, the adapter 112, the network 130, the server 140, the interface 114, the I/O bus 116, the disk controller 120, the storage 126, and so on. Receiving, as used herein, can include retrieving from storage 126, receiving from another device or process, receiving via an interaction with a user, or otherwise.

### Algorithm steps for an exemplary embodiment

In an exemplary embodiment, algorithm steps for determining the set of tuned robotic motion instructions of a robot taking into account sudden stops of the robot are below described.

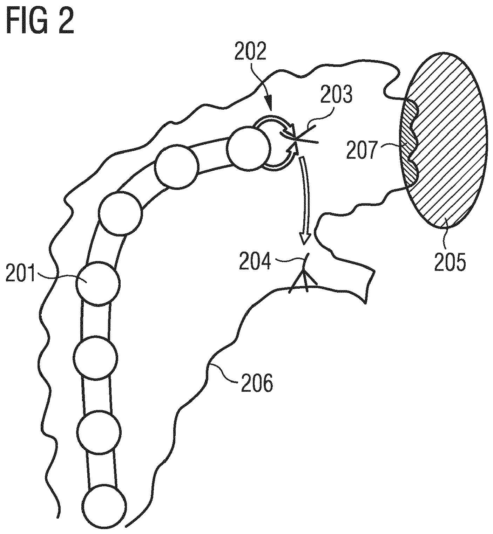

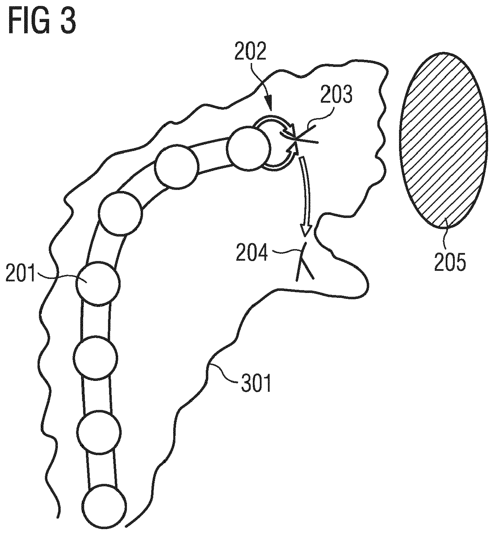

Assume, for illustration purposes, that this exemplary embodiment refers to the scenario of Figure 2 and Figure 3 where by iteratively tuning of robotic motion instructions a collision between a robot 201 and an object 205 is avoided also in case of rapid stops of the robot 201.

In a first algorithm step, information inputs are received. Example of information inputs include, but are not limited to: information on the three-dimensional ("3D") virtual robot with its operations, information on the robot tool, information on the sequence of target locations where robotic operations are to be performed, information on the 3D study environment of the cell layout (e.g. the virtual environment including parts, equipment, fences and other cell information), information on forbidden volumes, information on the maximum allowed production cycle time, information on the 3D human movements and the human operations.

With the terms "forbidden volumes" are herein defined the volumes which should not be touched by the robot, also in case of one or more rapid stops. Examples of forbidden volumes include, but are not limited to, objects of the 3D surrounding environment, swept volumes by other robots and/or human beings, safety zones and/or any other types of inviolable volumes.

In an optional algorithm step, the robot simulation is executed and the obtained cycle time is measured, preferably with a RRS simulation. Then, preferably, a convenient algorithm to reduce the obtainable cycle time is used so that the obtained gained time difference can be advantageously used for the further necessary tunings of the robotic motion instructions of critical rapid stops of robots. Examples of algorithms for reducing cycle time may include techniques for optimizing the ordering of the robotic path or techniques for optimizing the robotic joint configurations with optimizing criteria like e.g. reducing cycle time, saving energy, and/or reducing joint movements on a preferably collision free path.

In other words, since the maximum allowed cycle time is given as an input, with this optional step, one tries to reduce the current cycle time by path optimization (based on order or optimal configuration or joint movement or changing the robot base position or any other criteria) so as to have more flexibility to improve more potentially critical segments and locations.

Additionally, in another optional algorithm step, human simulation techniques and/or robot simulations of other surrounding robots are executed so that also the swept volumes of human personnel and/or other robots may advantageously be considered as forbidden volumes.

In a subsequent algorithm step, the robot simulation is executed in that, for each simulation time interval,
- a recently introduced robot simulation service with a mode of rapid stop capability is called, preferably being a RRS service;
- all the possible robot's poses, e.g. the lists of joint value sets, along the trajectory, are collected by simulating the robot's motion behavior as a result of a sudden stop.

In a subsequent algorithm step, stop envelopes of the robot for each target location are generated by:
- going over all robot's poses and jumping the robot to such positions and poses and capture them;
- generating a stop envelope for each target location, e.g. by taking into account all robotic positions, all robotic tool positions and\or any convenient shape considered around the tool gun.

In other words, with the last two steps, for each target location we get from the robot simulation service a list of robotic poses that represent the robot's rapid stop behavior along the movement and, in order to generate stop envelope from that, one jumps the robot with its equipment to such poses and capture them.

With the terms "robotic motion instructions" it is herein intended the information for the robot to reach a certain position and orientation in a 2\3D environment in a specific manner, such information includes target location data (e.g. position and rotation) and other motion instructions and parameters as well, including but not limited to, zone parameter, speed, acceleration, motion type, flyby intermediate location, configuration, external axes values, and/or any other motion parameter or instruction impacting the robot trajectory.

Robotic motion instructions relating to consecutive target locations and/or to intermediate locations can be grouped together and are herein called with the terms "segments of robotic motion instructions". As used herein, the terms "segment of robotic motion instructions" may also be used to include "sub-segments" of segments of robotic motion instructions. For example, if a segment of robotic motion instructions relates to robot motion from target location *xᵢ* to target location *x*_{*i*+*1*} and such motion takes *N* seconds, one could split the segment in N segments each of 1 second or one can split the segment into other types of smaller segments according to other criteria.

The robot stop envelope for a given target location or for a given segment of robotic motion instructions is herein defined as the graphic volume envelope representing the robot motion taking into account rapid stops along the robotic considered path for the given target location or for the given segment of robotic motion instructions.

In a subsequent algorithm step, overlapping zones between all robot's stop envelopes and forbidden volumes are searched. Such found overlapping zones are potentially critical zones, e.g. representing potential risky zones with interferences or collisions, which are further analyzed for eventual refinements. Since each stop envelope is associated to a given specific target location or to a given segment of robotic motion instructions, the target locations or the segments having at least one overlapping zone are marked as potentially critical target locations or potentially critical segments.

In the below description of this exemplary embodiment, the critical target locations are considered for illustration purposes, the skilled person may easily apply the teachings when considering critical segments.

Each potentially critical target location is rated according to a predefined risk level so as to find the target locations that are critical, i.e. whose risk level need to be eliminated or at least reduced by tuning the corresponding robotic motion instructions accordingly.

In a subsequent algorithm step, tunings of one or more robotic motion instructions are performed in order to reduce the size of the overlapping zones of the critical target locations. The tuning of robotic motion instructions may include, but not be limited to, changing speed, changing acceleration, changing the zone at which a location is considered to be reached by the robot and/or changing the robotic configuration/pose, motion type, configuration, external axes values and even changes to target location data and to fly by intermediate location data.

For each critical target location where tunings have been performed, a new stop envelope is calculated and generated with the previously described steps and it is checked whether overlapping zones are still present in order to check the need of further iterative tunings.

In embodiments, it is further checked that the cycle time with the new tunings of the robotic motion instructions is below an allowed maximum threshold and that the simulation is collision free.

Advantageously, the robot simulation is not executed for all the target locations again, but only for the critical ones, where tuning have been performed. Advantageously, calculations are reduced.

In the computations, it may be preferable to start to calculate from a location where the robot stops in order to use the correct momentum.

Accordingly, the robotic program is updated with the optimal found solutions with the iteratively tuned robotic motion instructions for the location targets rated as critical.

Figure 2 schematically illustrates a drawing of an exemplary case scenario of a robot where a rapid stop causes a collision with an object.

In Figure 2 it is shown a robot 201 with a tool 202 required to move during operation from a home target location *x₀* 203 to a first target location *x1* 204. An object 205 positioned in the proximity of the robot 201 presents a collision risk in case of a rapid stop. In fact, the stop envelope 206, generated for the robot 201 moving from the home target location *x₀* 203 to the first target location *x₁* 204, is interfering with the object 205 in overlapping zone 207. It means that due to some rapid stops events occurring in the movement of the robot 201 during the first segment of robotic motion instructions the robot 201 there are collisions with the object 205. In embodiments, time indexing *t₀-t₁* may advantageously be added to the segment for evaluating potential collisions with object that are non-static, so that collisions with moving objects (e.g. like humans, moving equipment or other robots) is checked only in the same relevant time frame.

Figure 3 schematically illustrates a drawing where with tuned robotic motion instructions in accordance with disclosed embodiments a collision with an object is avoided in case of rapid robot stops.

Assume that from the scenario illustrated in Figure 2, it was determined that the first segment is a critical segment due to the fact that there is an overlapping zone rated as critical. Therefore, for this first segment new robotic motion instructions are tuned in an iterative manner, e.g. by changing one or more of the robotic motion parameters, until the newly generated corresponding stop envelope 301 has no critical overlapping zone with the object 205.

In other embodiments, the iterations of the tunings are done until there is no overlapping zone at all instead than below a certain critical threshold rating the collision risk. In other embodiments, the iterations of the tunings are done until the maximum allowed production cycle time is reached.

In embodiments, the time indexing for this segment after the tunings may change into *t₀-tₓ,* for example into a bigger/smaller time interval if the speed of the robotic motion parameters of the segment has been reduced/increased during the tunings. In such case, the time indexing for the segments that follow (not shown) should be updated accordingly.

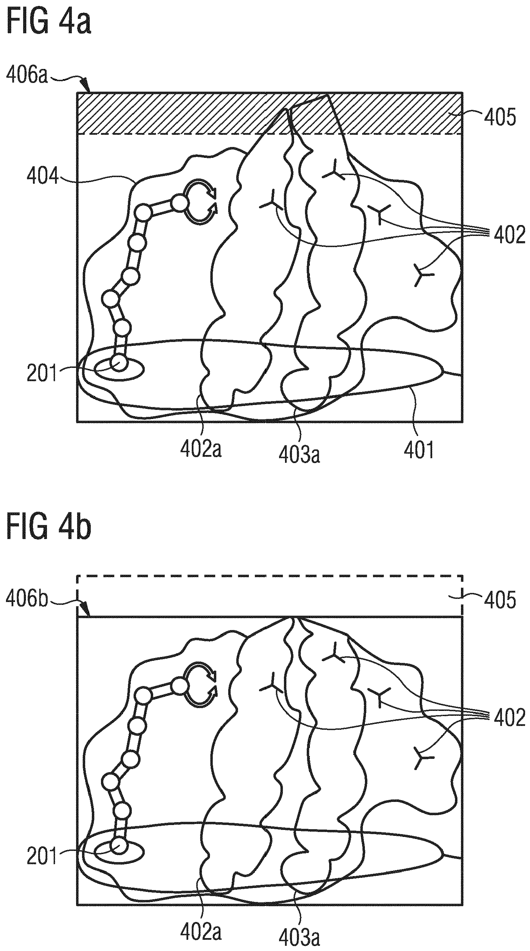

Figure 4a and Figure 4b schematically illustrates drawings where with tuned robotic motion instructions in accordance with disclosed embodiments a safety volume is advantageously reduced in size.

In Figure 4a, a robot 201 is moving along a conveyor 401 to reach a sequence of target locations 402, with their corresponding segments of robotic motion instructions. For each segment of robotic motion instructions a corresponding stop envelope is generated by taking into account a set of sudden stops of the robot 401. In the drawing, only two stop envelops are shown 402a,403a, the other stop envelopes are not shown, whilst the volume 404 resulting from the collections of all robot's stop envelopes is shown.

A forbidden volume 405, filled in grey in Figure 4a, is an increase in size of the safety zone by decreasing the non-safety zone size 406a into the new non-safety zone 406b of Figure 4b.

Safety zones are used in industrial automation to define the zones around robots that should not be crossed for safety reasons by human operators and by equipment in the surrounding environment. In Figure 4b, the safety zone is the zone outside the non safety-zone 406b.

The shown stop envelops 402a, 403a are both overlapping with the forbidden zone 405 and their two corresponding segments are therefore rated as critical segments.

For the two critical segments, the segment of robotic motion instructions are iteratively tuned until the two newly generated stop envelopes 402b, 403b in Figure 4b do not overlap with the forbidden volume 405 anymore as shown in Figure 4b. Advantageously, with embodiments, it is possible to reduce the size of safety zones in an industrial facility.

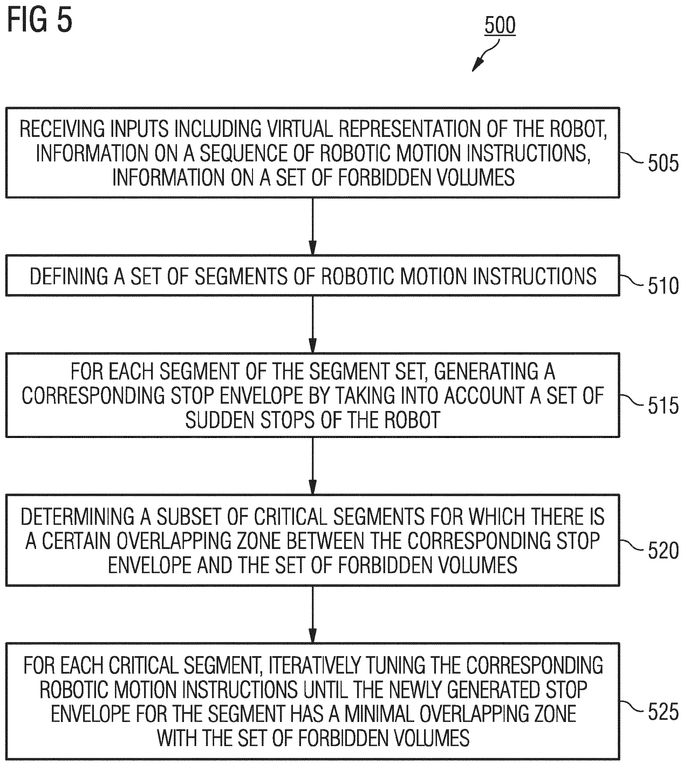

Figure 5 illustrates a flowchart 500 of a method for determining a set of tuned robotic motion instructions of a robot in accordance with disclosed embodiments. Such method can be performed, for example, by system 100 of Figure 1 described above, but the "system" in the process below can be any apparatus configured to perform a process as described. Along a sequence of locations, robotic tasks are to be performed by a tool of the robot, wherein a sudden stop of the robot implies a trajectory deviation from a planned trajectory.

At act 505, inputs are received, including virtual representation of the robot, information on a sequence of robotic motion instructions, information on a set of forbidden volumes. In embodiments, the information on the robotic motion instructions include, but are not limited to, target location data (e.g. position and rotation), zone parameter which indicates when the robot is considered to have reached the location, speed, acceleration, motion type, flyby intermediate location, configuration, external axis values and/or any other motion parameter or instruction impacting the robot trajectory. In embodiments, the sequence of segments of robotic motion instructions received may conveniently be obtained by simulating the robot trajectory with optimizing criteria. In embodiments, examples of forbidden volumes include, but are not limited to, swept volumes generated from other simulations (e.g. human or other robots'), surrounding objects (e.g. equipment pieces, tools and other objects); volumes outside safety zones, and/or other types of inviolable volumes.

At act 510, a set of segments of robotic motion instructions are defined. In embodiments, the segments of robotic motion instruction may correspond to a plurality of consecutive target locations and/or a plurality of sub-segments being then part of them.

At act 515, for each segment of the segment set, generating a corresponding stop envelope by taking into account a set of sudden stops of the robot. In embodiments, the set of sudden stops of the robot may include one, a few or all possible sudden stops of the robot for each segment. In embodiments, the stop envelope may be generated for a segment by performing the following sub-steps:
- simulating a set of robot stop trajectories in case of a set of sudden stops of the robot;
- collecting the corresponding set of robot poses, representing the robot behavior in case of rapid stop, along the set of simulated robot stop trajectories;
- generating a corresponding stop envelope for the segment by taking into account the collected set of robot poses.

At act 520, determining a subset of critical segments for which there is a certain overlapping zone between the corresponding stop envelope and the set of forbidden volumes. In embodiments, the certain overlapping zone may have a size of above a minimal threshold above which any overlap is considered to have a certain non-negligible impact.

At act 520, for each segment of the critical segment subset, iteratively tuning the set of robotic motion instructions until the newly generated stop envelope for the segment has a minimal overlapping zone with the set of forbidden volumes. In embodiments, minimal overlapping zone may mean zero overlap or a minimal desired threshold below which the impact is to be considered negligible.

In embodiments, time indexing is added for determining the overlapping zones. Time indexing is the added to the segments, to the corresponding stop envelopes for checking collision with moving forbidden zones in the relevant time intervals.

In embodiments, updating the corresponding robotic program with the solution found by iteratively tuning the robotic motion instructions of the critical target subset.

In embodiments, tuned motion instructions of the robotic program in case of sudden stops of the robot are determined. In fact, by the corresponding robotic program is updated with the solution found by iteratively tuning the robotic motion instructions of the critical target subset.

Of course, those of skill in the art will recognize that, unless specifically indicated or required by the sequence of operations, certain steps in the processes described above may be omitted, performed concurrently or sequentially, or performed in a different order.

Those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the mechanism of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims.

## Claims

1. A method for determining, by a data processing system, a set of tuned robotic motion instructions of a robot for performing robotic tasks, wherein a sudden stop of the robot implies a trajectory deviation, comprising the following steps:
a) receiving inputs (505) including virtual representation of the robot (201), information on a sequence of robotic motion instructions, information on a set of forbidden volumes (205);
b) defining (510) a set of segments of robotic motion instructions;
c) for each segment of the segment set, generating (515) a corresponding stop envelope by taking into account a set of sudden stops of the robot;
d) determining (520) a subset of critical segments for which there is a certain overlapping zone between the corresponding stop envelope and the set of forbidden volumes (205); and,
e) for each segment of the critical segment subset, iteratively tuning (525) the corresponding robotic motion instructions until the newly generated stop envelope (301) for the segment has a minimal overlapping zone with the set of forbidden volumes.

2. The method of claim 1, wherein the stop envelope of step b) and of step e) is generated for a segment by performing the following sub-steps:
- simulating a set of robot stop trajectories in case of a set of sudden stops of the robot;
- collecting the corresponding set of robot poses along the set of simulated robot stop trajectories; and,
- generating a corresponding stop envelope for the segment by taking into account the collected set of robot poses.

3. The method according to claim 1 or 2, wherein the robotic motion instructions are selected from the group consisting of:
- target location data (position and rotation);
- zone parameter;
- speed;
- acceleration;
- motion type;
- flyby intermediate location;
- configuration;
- external axes values;
- any other motion parameter or instruction impacting the robot trajectory.

4. The method according to any of the preceding claims, wherein the sequence of segments of robotic motion instructions received at step a) is obtained by simulating the robot trajectory with optimizing criteria.

5. The method according to any of the preceding claims, wherein the set of forbidden volumes is obtained:
- generating swept volumes from other simulations,
- taking into account a set of surrounding objects;
- taking into account the volume outside the safety zone;
- taking into account any other types of inviolable volumes.

6. The method according to any of the preceding claims, further including:
- updating the corresponding robotic program with the solution found by iteratively tuning the robotic motion instructions of the critical target subset.

7. The method according to any of the preceding claims, wherein time indexing is added to the stop envelopes and to the forbidden volumes in order to determine time-relevant overlapping zones.

8. A data processing system comprising:
a processor; and
an accessible memory, the data processing system particularly configured to:
a) receive inputs (505) including virtual representation of the robot, information on a sequence of robotic motion instructions, information on a set of forbidden volumes;
b) define a set of segments of robotic motion instructions;
c) for each segment of the segment set, generate a corresponding stop envelope by taking into account a set of sudden stops of the robot;
d) determine a subset of critical segments for which there is a certain overlapping zone between the corresponding stop envelope and the set of forbidden volumes; and,
e) for each segment of the critical segment subset, iteratively tune the corresponding robotic motion instructions until the newly generated stop envelope for the segment has a minimal overlapping zone with the set of forbidden volumes.

9. The data processing system according to claim 8, wherein the stop envelope of item b) and of item e) is generated for a segment by having the data processing system particularly configured to:
- simulate a set of robot stop trajectories in case of a set of sudden stops of the robot;
- collect the corresponding set of robot poses along the set of simulated robot stop trajectories; and,
- generate a corresponding stop envelope for the segment by taking into account the collected set of robot poses.

10. The data processing system according to claim 8 or 9, wherein the robotic motion instructions are selected from the group consisting of:
- target location data (position and rotation);
- zone parameter;
- speed;
- acceleration;
- motion type;
- flyby intermediate location;
- configuration;
- external axes values;
- any other motion parameter or instruction impacting the robot trajectory.

11. The data processing system according to any of the claims 8 to 10, wherein the sequence of segments of robotic motion instructions received at item a) is obtained by simulating the robot trajectory with optimizing criteria.

12. The data processing system according to any of the claims 8 to 11, wherein the set of forbidden volumes is obtained by:
- generating swept volumes from other simulations,
- taking into account a set of surrounding objects;
- taking into account the volume outside the safety zone;
- taking into account any other types of inviolable volumes.

13. The data processing system according to any of the claims 8 to 12, further including:
- updating the corresponding robotic program with the solution found by iteratively tuning the robotic motion instructions of the critical target subset.

14. The data processing system according to any of the claims 8 to 13, wherein time indexing is added to the stop envelopes and to the forbidden volumes in order to determine time-relevant overlapping zones.

15. A non-transitory computer-readable medium encoded with executable instructions that, when executed, cause one or more data processing systems to:
a) receive inputs including virtual representation of the robot, information on a sequence of robotic motion instructions, information on a set of forbidden volumes;
b) define a set of segments of robotic motion instructions;
c) for each segment of the segment set, generate a corresponding stop envelope by taking into account a set of sudden stops of the robot;
d) determine a subset of critical segments for which there is a certain overlapping zone between the corresponding stop envelope and the set of forbidden volumes; and,
e) for each segment of the critical segment subset, iteratively tune the corresponding robotic motion instructions until the newly generated stop envelope for the segment has a minimal overlapping zone with the set of forbidden volumes.
